# EUROPEAN PATENT SPECIFICATION

(11) **EP 0 664 417 B1**
(45) Date of publication and mention of the grant of the patent: **05.07.2000**
(21) Application number: 94203330.9
(22) Date of filing: 15.11.1994
(51) Int. Cl.: F16L 55/132

(54) **Expandable sealing element**
Ausdehnbares Dichtelement
Elément d'étanchéité gonflable

(30) Priority: 29.11.1993 NL 9302063
(43) Date of publication of application: 26.07.1995
(73) Proprietor: Van Beugen Beheer B.V., 3284 AN Zuid Beijerland (NL)
(72) Inventor: van Beugen, Freddy, NL-3263 AK Oud-Beyerland (NL)
(74) Representative: de Bruijn, Leendert C.

(56) References cited:
- EP-A- 0 583 819
- DE-U- 8 527 124
- US-A- 1 906 151
- US-A- 4 424 861

## Description

The invention is related to an expandable sealing element for an elongated, hollow body such as a pipeline, which sealing element comprises a balloon element which is inflatable by means of a filling medium and is provided wit a sheath which is composed of a knitted material, to at least partially counteract the expansion of the sealing element in the longitudinal direction of the body to be sealed off
wherein the sheath possesses a section which has constant cross-sectional dimensions in the longitudinal direction, as well as at least one adjoining end sectionof decreasing cross-sectional dimensions.

Such sealing element is known from DE-U-8527124. The object of the invention is to improve the sealing element in such a way that the balloon element thereof is better supported by the sheath without any irregularities which might cause damage to the balloon element.

This object is achieved in that the sheath is composed of a circular-knitted material in one piece, and in that at least an end section is composed of a knitted material of decreasing diameter.

A knitted material has the characteristic that stretch in a specific direction is to a certain extent accompanied by shrinkage in a direction perpendicular thereto. As soon as the balloon element accommodated in such a knitted sheath expands, the sheath stretches with it in the transverse direction and shrinks in the longitudinal direction. By this means elongation of the balloon element can be effectively counteracted, whilst the desired flexibility in the transverse direction is still ensured.

It is known per se to use a separate sheath with a sealing element. Said known separate sheaths are composed of strips of material which are sewn together at the edges. The disadvantage of sewn sheaths of this type is that tearing can occur at the sewn seams, as a result of which the supporting effect of the sheath is lost and the balloon element bursts. In this context a significant improvement is obtained according to the invention in that sheath is a circular-knitted material in one piece. A circular-knitted sheath is continuous and has no irregularities such as sewn seams, as a result of which the reliability of the sealing element is appreciably greater than that of the known sealing elements.

To enable the knitted sheath to be able to exert its stabilising effect in a reliable manner, any shift in position in the longitudinal direction between sheath and balloon element must be avoided. For this reason the sheath must be fixed in the longitudinal direction with respect to the balloon element.

There is no sewn seam between the various sections of the knitted sheath, with the result that on the one hand the desired enclosure of the balloon element is obtained and, on the other hand, the reliability of the sealing element is ensured by virtue of the absence of weakening sewn seams.

As already mentioned, the knitted sheath has appreciable flexibility in the transverse direction. Consequently, a limited number of standard sheaths, each suitable for different nominal pipe diameters, can suffice.

The fibres from which the sheaths are knitted can be composed of, for example, steel, carbon, glass or plastic, but can also, for example, be composed of wool. Furthermore, the sheath can be provided with a layer of latex, polyurethane and the like on the outside. The sheath can also be permanently glued to the balloon element.

The invention will now be explained in more detail with reference to a few illustrative embodiments which are shown in the figures.
Figure 1 shows a partially exposed, perspective view of a sealing element according to the invention in the non-expanded state.
Figure 2 shows the expansion element in the expanded state.
Figure 3 shows an embodiment of the expansion element.

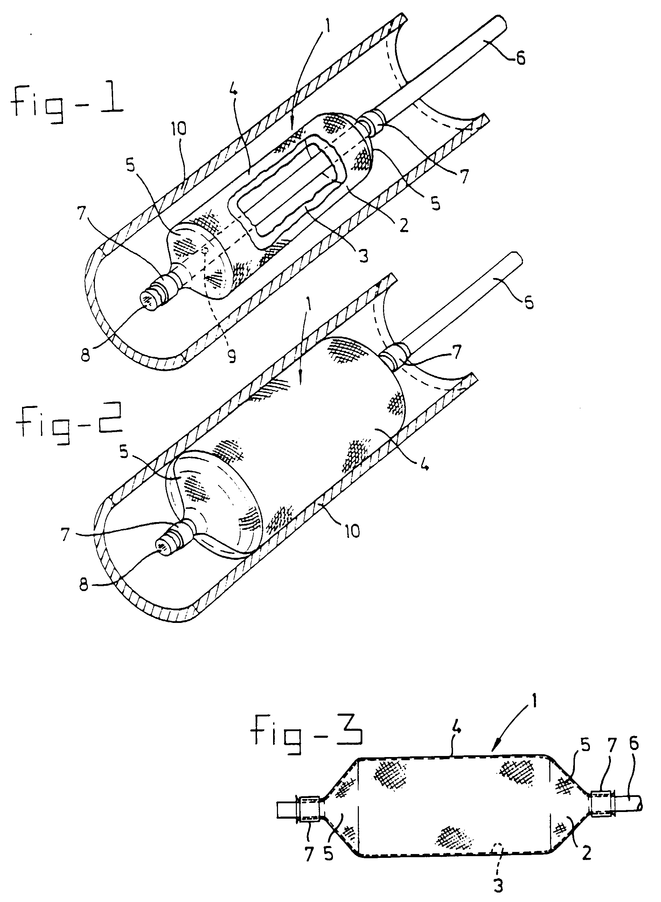

The expansion element 1 shown in Figure 1, 2 and 3 comprises a sheath 2 in which a balloon element 3 is accommodated. As can also be seen in Figure 3, the sealing element has a straight or cylindrical section 4 with adjoining end sections 5 on either side, which end sections 5 as it were form end walls. The sealing element 1 is fixed by means of said end sections 5 to blowpipe 6, for which purpose, for example, retaining rings 7 can be used.

The blowpipe 7 is closed at its end 8 and has a blow opening 9 which opens into the interior of the balloon element 3. By means of the blowpipe 6, the sealing element 1 can be introduced into a pipe 10, which is to be sealed off.

When the sealing element 1 is in the correct position, a filling medium, such as air, is supplied via blowpipe 6, as a result of which the balloon element inflates and in so doing expands the sheath with it. Ultimately the sealing element, and in particular the sheath 2 thereof, comes into contact with the interior of the pipe 10, as a result of which the latter is sealed off. The greater the force exerted in the radial direction, the better is the seal produced in pipe 10 by the sealing element.

The sheath 2 is composed of a knitted material. A knitted material has the characteristic that it can be stretched; in the case of the sheath 2, the knitted material must stretch in the circumferential direction of the sealing element. On stretching in this way, the knitted material is shortened in the direction perpendicular to the direction of stretch, that is to say in the longitudinal direction of the pipe 10. The consequence of this effect is that the balloon element is forced to inflate in the radial direction and that its expansion in the longitudinal direction of the pipe 10 is counteracted. When the sealing element behaves in this way, it is ensured that said element is pressed firmly against the inner surface of the pipeline 10, which results in an excellent sealing effect.

The sealing element comprises a sheath 2 which has a straight section 4 and end sections 5 which are composed of knitted material of decreasing diameter. Without there being any seam whatsoever in the sheath 2, a sheath shape is obtained within which the balloon element 5 is reliably fixed. The end sections 5 prevent the balloon element 3 from expanding in the longitudinal direction of the pipe; by virtue of the flexibility of the knitted material, which has already been mentioned above, the radial inflatability of the balloon element 3 is always ensured.

## Claims

1. Expandable sealing element (1) for an elongated, hollow body such as a pipeline, which sealing element comprises a balloon element (3) which is inflatable by means of a filling medium and is provided with a sheath (2) which is composed of a knitted material, to at least partially counteract the expansion of the sealing element (1) in the longitudinal direction of the body to be sealed off wherein the sheath (2) possesses a section (4) which has constant cross-sectional dimensions in the longitudinal direction, as well as at least one adjoining end section (5)of decreasing cross-sectional dimensions,
characterized in that the sheath (2) is composed of a circular-knitted material in one piece, and in that at least an end section (5) is composed of a knitted material of decreasing diameter.

## Patentansprüche

1. Ausdehnbares Dichtungselement (1) für einen länglichen Hohlkörper, wie beispielsweise eine Rohrleitung, welches Dichtelement ein Ballonelement (3) umfaßt, das mittels eines Füllmediums aufblasbar ist und das mit einer Umhüllung (2) versehen ist, welche aus einem gewirkten oder gestrickten Material hergestellt ist, um zumindest teilweise der Ausdehnung des Dichtungselements (1) in Längsrichtung des abzudichtenden Körpers entgegenzuwirken, wobei die Umhüllung (2) einen Abschnitt (4), welcher konstante Querschnittsdimensionen in Längsrichtung aufweist, sowie wenigstens einen benachbarten Endabschnitt (5) mit abnehmenden Querschnittsdimensionen besitzt,
dadurch gekennzeichnet,
daß die Umhüllung (2) aus einem rundgewirkten oder rundgestrickten einstückigen Material hergestellt ist und daß zumindest ein Endabschnitt (5) aus einem gewirkten oder gestrickten Material abnehmenden Durchmessers gebildet ist.

## Revendications

1. Elément d'étanchéité extensible (1) pour un corps creux, allongé, tel qu'un pipeline, lequel élément d'étanchéité comprend un élément de ballonnet (3) qui est gonflable au moyen d'un milieu de remplissage et qui est pourvu d'un manchon (2) qui est composé d'un matériau à mailles, pour au moins partiellement contrebalancer l'extension de l'élément d'étanchéité (1) dans le sens longitudinal du corps à sceller, dans lequel le manchon (2) comporte une section (4) qui présente des dimensions en coupe constantes dans le sens longitudinal, ainsi qu'au moins une section d'extrémité avoisinante (5) de dimensions en coupe décroissantes,
caractérisé en ce que le manchon (2) est composé d'un matériau à mailles circulaires d'une pièce, et en ce qu'au moins une section d'extrémité (5) est composée d'un matériau à mailles de diamètre décroissant.
